# EUROPÄISCHE PATENTSCHRIFT

(11) **EP 3 758 827 B1**
(45) Veröffentlichungstag und Bekanntmachung des Hinweises auf die Patenterteilung: **11.01.2023**
(21) Anmeldenummer: 19708831.3
(22) Anmeldetag: 01.03.2019
(51) Int. Cl.: B01D 46/00, B01D 46/52, B01D 46/24, B01D 46/58

(54) **KOALESZENZABSCHEIDER, INSBESONDERE ZUR VERWENDUNG IN EINEM KOMPRESSORDRUCKLUFTSYSTEM, KOMPRESSORDRUCKLUFTSYSTEM SOWIE VERWENDUNG EINES KOALESZENZABSCHEIDERS**
COALESCENCE SEPARATOR, IN PARTICULAR FOR USE IN A COMPRESSED AIR COMPRESSOR SYSTEM, COMPRESSED AIR COMPRESSOR SYSTEM, AND USE OF A COALESCENCE SEPARATOR
SÉPARATEUR À COALESCENCE, EN PARTICULIER DESTINÉ À ÊTRE UTILISÉ DANS UN SYSTÈME D'AIR COMPRIMÉ DE COMPRESSEUR, SYSTÈME D'AIR COMPRIMÉ DE COMPRESSEUR ET UTILISATION D'UN SÉPARATEUR À COALESCENCE

(30) Priorität: 01.03.2018 DE 102018001601
(43) Veröffentlichungstag der Anmeldung: 06.01.2021
(73) Patentinhaber: MANN+HUMMEL GmbH, 71636 Ludwigsburg (DE)
(72) Erfinder: GREIN, Thomas, 76344 Eggenstein-Leopoldshafen (DE); DWORATZEK, Klemens, 68535 Edingen (DE); ZÜRKER, Markus, 67373 Dudenhofen (DE)
(74) Vertreter: Mann + Hummel Intellectual Property
(86) Internationale Anmeldenummer: PCT/EP2019/055088
(87) Internationale Veröffentlichungsnummer: WO 2019/166600

(56) Entgegenhaltungen:
- WO-A1-2017/137335
- US-A- 4 878 929
- US-A1- 2008 250 772

## Beschreibung

### Technisches Gebiet

Die Erfindung betrifft einen Koaleszenzabscheider nach dem Oberbegriff des Anspruchs 1, dessen Verwendung in einem Kompressordruckluftsystem sowie ein Kompressordruckluftsystem.

### Stand der Technik

Aus US 2008/250772 A1 ist eine mehrstufige Vorrichtung zum Abscheiden von Flüssigkeitstropfen aus Gasen bekannt. Für stationäre und fahrbare Druckluftanlagen werden in der Regel Schraubenkompressoren verwendet. Die hierfür verwendeten Kompressoren erzeugen einen Druck von bis zu ca. 20 bar, typischerweise etwa 7 bis 8 bar, und benötigen Öl zum Schmieren und Kühlen der ineinandergreifenden Schrauben der Kompressionsstufe. Das hierzu zugeführte Öl wird in den komprimierten Luftstrom eingebracht und muss vor der Verwendung der Druckluft an Abnahmestellen abgeschieden und dem Ölkreislauf wieder zugeführt werden. Es werden pro Kubikmeter Luft ca. 5 Liter Öl in den Schraubenkompressor eingespritzt; das Entölen der Druckluft stellt somit eine wichtige Maßnahme dar. Um den größten Teil dieses Öls zurückzugewinnen und die Druckluft von dem Öl zu reinigen, werden Koaleszenzabscheider in der Form von in Druckbehälter einsetzbaren Luftentölelementen (= Luftentöleinsätzen) oder Luftentölboxen in Form von Wechselfiltern (sog. Spin-On Filter) benutzt, die im Zuge der Wartung der Anlage regelmäßig auszutauschen sind. Diese scheiden einen Großteil des in der Druckluft vorhandenen Öls ab. Stromab sind in der Regel noch Nachabscheider angeordnet, die noch feinste Tropfen und/oder Öl in geringer Konzentration abscheiden können.

Es ist bekannt, für derartige Anwendungen Koaleszierfiltermedien zu verwenden. In diesen verfangen sich Öltröpfchen an den Fasern und verbinden sich zu größeren Tröpfchen, die dann abdrainieren. Zur Ölabscheidung in Kompressoren werden in der Regel zweistufige Hauptabscheider-Koaleszenzfilterkörper verwendet, bei welchen mehrere Lagen eines gröberen Glasfaserpapiers stromauf mehrerer Lagen eines feineren Glasfaserpapiers Verwendung finden. Die stromab angeordneten, feineren Lagen dienen dazu, die in den gröberen Bereichen noch nicht abgefangenen Tröpfchen abzuscheiden. Auf der abströmseitigen Seite des Koaleszenz-Filterkörpers fließen signifikante Ölmengen ab, so dass es aufgrund der durchströmenden Luft zu Blasenbildung kommen kann, wodurch auf der Reinseite wieder Tröpfchen entstehen können. Um diese abzufangen und die Drainage zu fördern ist stromab dieses Koaleszenzfilterkörpers in der Regel ein offenporiges Drainagevlies angeordnet, welches insbesondere für die durch Blasenbildung erzeugten Tropfen zusätzlich als Nachabscheider dienen kann.

Der Erfindung liegt die Aufgabe zugrunde, einen Koaleszenzabscheider der vorstehend genannten Art so weiterzubilden, dass dessen Funktion optimiert wird, insbesondere dass der Druckverlust des Koaleszenzabscheiders verbessert wird.

### Offenbarung der Erfindung

Diese Aufgabe wird durch einen Koaleszenzabscheider nach dem Oberbegriff des Anspruchs 1, einem Kompressordruckluftsystem nach Anspruch 19 sowie die Verwendung eines Koaleszenzabscheiders zur Abscheidung von Flüssigkeitströpfchen aus einem Gasstrom, insbesondere als Öl-Hauptabscheider stromab eines Schraubenkompressors nach Anspruch 20 gelöst.

Mithin basiert die Erfindung darauf, einen Mehrlagenaufbau bevorzugt aus einem insbesondere nassgelegten Glasfaserpapier zur Ölabscheidung zu verwenden. Der erfindungsgemäße Mehrlagenaufbau mit seiner vergleichsweise offenen Struktur kann überraschend als effizienter Endabscheider und als einzige und/oder feinste (Haupt-) Abscheidestufe eingesetzt werden, insbesondere sind zusätzlich zu dem im Mehrlagenaufbau verwendeten Glasfaserpapier keine feinere Feinabscheidestufen oder Feinabscheidelagen oder unterschiedlich feine Lagenarten innerhalb eines Koaleszenz-Filterkörpers oder Koaleszenzabscheiderwechseleinsatzes (auch Koaleszenzabscheiderelement genannt) erforderlich.

Es wurde überraschend festgestellt, dass Koaleszenzfiltermedien, die ein bestimmtes Produkt aus Flächenmasse und Luftdurchlässigkeit aufweisen, sich zur Verwendung in einem Koaleszenzabscheider, insbesondere für hohe Ölvolumenströme, eignen, ohne dass, wie im Stand der Technik üblich, die Verwendung einer abströmseitig angeordneten, zweiten, feineren und dichteren Lage zur Erreichung des für die Anwendung notwendigen Abscheidegrades nötig ist. Durch die Möglichkeit, auf die zweite, feiner abscheidende Lagenanordnung verzichten zu können, fällt der Negativeffekt der zusätzlichen Feinabscheiderlagen auf den Druckverlust weg, überraschend ohne dabei bei der Abscheidung von Ölaerosol aus der Druckluft eines Schraubenkompressors Nachteile in der Abscheideeffizienz in Kauf nehmen zu müssen.

Der erfindungsgemäße Koaleszenzabscheider dient und ist ausgelegt zur Abscheidung von Flüssigkeitströpfchen aus einem Gasstrom, insbesondere zur Verwendung als Ölhauptabscheider eines Ölabscheidesystems eines Schraubenkompressors, insbesondere für Ölkonzentrationen von mindestens 0,1 g/m³ (Volumen bezogen auf Standardbedingungen) und umfasst einen zwischen dem Gaseinlass und dem Gasauslass anordenbaren, bevorzugt gewickelten, einen Hohlraum umschließenden Mehrlagenaufbau eines Koaleszenzfiltermediums. Das Koaleszenzfiltermedium ist so ausgelegt, dass das Produkt aus Luftdurchlässigkeit und Flächenmasse einer Einzellage des Koaleszenzfiltermediums mindestens 16 g/m*s, insbesondere mindestens 18 g/m*s, bevorzugt mindestens 25 g/m*s, weiter bevorzugt mindestens 35 g/m*s beträgt.

Gemäss der Erfindung beträgt das Produkt aus Luftdurchlässigkeit und Flächenmasse einer Einzellage des Koaleszenzfiltermediums maximal 100 g/m*s, bevorzugt maximal 80 g/m*s, besonders bevorzugt maximal 50 g/m*s. Bevorzugt ist vorgesehen, dass der Mehrlagenaufbau als Koaleszenzfiltermedium mehrere übereinander angeordnete und nacheinander durchströmbare Lagen eines Glasfaserpapiers aufweist und bevorzugt im Wesentlichen oder ausschließlich, zumindest was die Abscheideleistung bestimmenden Eigenschaften angeht, aus einem Glasfaserpapier besteht. Dies bedeutet, dass den Druckverlust und die Abscheideleistung nicht beeinflussende Schutz- oder Stützlagen, beispielsweise aus flauschigem Kunstoffvlies oder insbesondere druckstabilen Gittern oder Netzen vorgesehen werden können. Alternativ zu der bevorzugten, gewickelten Anordnung eines bandförmigen Koaleszenzfiltermediumstreifens zur Bildung einer mehrlagigen Anordnung kann auch eine Mehrzahl von passend geschnittenen Koaleszenzfiltermediumblättern aufeinander zu einem blockartigen Stapel angeordnet sein.

Die Flächenmasse ergibt sich durch die Menge der pro Flächeneinheit im Koaleszenzfiltermedium vorhandenen Fasern, die für die vorliegende Anwendung im Wesentlichen und bevorzugt vollständig Glasfasern sind. Geringe Anteile von Bindemitteln oder Bindefasern aus anderen Materialien haben dabei in der Regel untergeordneten Einfluss auf die Flächenmasse. Die Luftdurchlässigkeit ist abhängig vom Durchmesser der verwendeten Fasern, der Art und dem Anteil an Binder und der Porosität. Bevorzugt ist der Mehrlagenaufbau dichtend zwischen zwei insbesondere runde Endscheiben zur seitlichen Abdichtung befestigt, beispielsweise geklebt oder geklemmt. So kann ein Koaleszenzabscheiderwechseleinsatz gebildet werden.

In einer bevorzugten Ausführungsform ist vorgesehen, dass die Einzellagendicke des Koaleszenzfiltermediums mehr als 0.1 mm, insbesondere mehr als 0.3 mm, bevorzugt mehr als 0.4 mm, besonders bevorzugt mehr als 0.6 mm und maximal 2 mm, insbesondere maximal 1mm, bevorzugt maximal 0.8 mm beträgt. So kann der Mehrlagenaufbau prozesssicher hergestellt werden.

In einer bevorzugten Ausführungsform ist vorgesehen, dass die Flächenmasse der Einzellage des Koaleszenzfiltermediums größer 40 g/m², bevorzugt größer 50 g/m², besonders bevorzugt größer 70 g/m² kleiner 100 g/m² beträgt. Die Mehrlagenaufbauten, insbesondere gewickelte Mehrlagenaufbauten können in diesen Flächenmassenbereichen prozesssicher aufgebaut werden.

In einer bevorzugten Ausführungsform ist vorgesehen, dass das Koaleszenzfiltermedium eine Masse zu Volumen-Verhältnis von kleiner 170 kg/m³, insbesondere kleiner 150 kg/m³, bevorzugt kleiner 140 kg/m³, besonders bevorzugt kleiner 120 kg/m³ und größer 80 kg/m³, insbesondere größer 100 kg/m³, bevorzugt größer 110 kg/m³ aufweist. Das bedeutet bei üblichen Dichten von Glasfasern eine Porosität von bevorzugt minimal 93 % (entspricht Masse zu Volumen-Verhältnis von etwa 170 kg/m³). Es wurde überraschend festgestellt, dass bei der Verwendung eines erfindungsgemäßen Mehrlagenaufbaus mit den Produkt-Werten aus Luftdurchlässigkeit und Flächenmasse gem. Anspruch 1 derartige, vergleichsweise poröse Einzellagen verwendet werden können, um ausreichende Abscheidegrade bei akzeptablen Stapelabmessungen zu erreichen, ohne dass zusätzlich eine feine Stufe verwendet werden muss. Zumindest teilweise können dabei verbesserte Druckverluste erreicht werden. Weiter ist bevorzugt eine Porosität von bevorzugt maximal 96 % (entspricht Masse zu Volumen-Verhältnis von etwa 100 kg/m³). Dies trägt zu einer guten Verarbeitbarkeit der Filtermedien bei. Ferner ist bevorzugt, dass das Koaleszenzfiltermedium eine Luftdurchlässigkeit der Einzellage mehr als 180 l/m²s (Liter pro Quadratmeter und Sekunde), insbesondere mehr als 200 l/m²s, bevorzugt mehr als 300 l/m²s, besonders bevorzugt mehr als 400 l/m²s und maximal 1500 l/m²s, insbesondere maximal 1000 l/m²s, bevorzugt maximal 750 l/m²s, besonders bevorzugt maximal 500 l/m²s aufweist. So kann die Abscheideleistung im Bereich der Kompressordruckluftentölung optimiert werden.

In einer bevorzugten Ausführungsform ist vorgesehen, dass der Mehrlagenaufbau zwischen 2 und 80, insbesondere zwischen 10 und 30, bevorzugt unmittelbar aufeinander angeordnete Lagen des Koaleszenzfiltermediums aufweist, die entweder gestapelt oder gewickelt sind. So kann ein stabiler und die Abscheideleistungserfordernisse erfüllender Koaleszenzabscheider bereitgestellt werden.

In einer bevorzugten Ausführungsform ist vorgesehen, dass das Koaleszenzfiltermedium einschichtig ist, wobei die eine Schicht bevorzugt homogen ist. Homogen bedeutet in Bezug auf die Einzellage, dass keine über eine herstellungsverfahrensbedingte Unregelmäßigkeit hinausgehende Unregelmäßigkeit (Änderungen der Porosität oder Faserfeinheit über die Dicke des Koaleszenzfiltermediums) im Koaleszenzfiltermedium vorliegt. Auf diese Weise kann in einem Arbeitsgang, insbesondere einem einzigen Wickelvorgang, aus einem Koaleszenzfiltermedium ein für die Gesamtabscheideleistung ausreichender Mehrlagenaufbau bereitgestellt werden, der wie weiter bevorzugt ebenfalls über seine Gesamtdicke in diesem Sinne homogen aufgebaut ist.

Der Mehrlagenaufbau ist bevorzugt einbahnig ausgeführt, d. h. er ist bevorzugt aus einer einzigen, zusammenhängenden Bahn gewickelt. So kann ein homogener Aufbau des Mehrlagenaufbaus sichergestellt werden.

In einer bevorzugten Ausführungsform ist vorgesehen, dass die Gesamtdicke des Mehrlagenaufbaus mindestens 8 mm, bevorzugt mindestens 10 mm, besonders bevorzugt mindestens 12 mm beträgt. So kann ein die Abscheideleistungserfordernisse erfüllender Mehrlagenaufbau bereitgestellt werden. Dabei beträgt die Gesamtdicke des Mehrlagenaufbaus maximal 60 mm, bevorzugt maximal 50 mm, um Bauraumerfordernisse in Druckbehältern von Kompressoren zu erfüllen. Besonders bevorzugt beträgt die Gesamtdicke des Mehrlagenaufbaus maximal 25 mm. So kann sowohl eine ausreichende Abscheideleistung als auch das Bauraumerfordernis zur Verwendung in Luftentölboxen in Form von Wechselfiltern (sog. Spin-On Filter) erfüllt werden.

In einer bevorzugten Ausführungsform ist vorgesehen, dass die Gesamtluftdurchlässigkeit des Mehrlagenaufbaus kleiner 100 l/m²s, insbesondere kleiner 70 l/m²s, bevorzugt kleiner 50 l/m²s und besonders bevorzugt kleiner 30 l/m²s beträgt. Dies trägt dazu bei, die Anforderungen an die Gesamtabscheideeffizienz für die Kompressorluftentölung zu erfüllen.

In einer bevorzugten Ausführungsform ist vorgesehen, dass die Glasfasern im Koaleszenzfiltermedium einen Massenanteil von mindestens 50 %, insbesondere 90 %, bevorzugt mindestens 93 %, besonders bevorzugt mindestens 95 % aufweisen. Ferner ist bevorzugt, dass der Masseanteil veraschbarer Materialien im Koaleszenzfiltermedium max. 10 %, bevorzugt max. 7 %, besonders bevorzugt max. 5 % beträgt. Das Koaleszenzfiltermedium kann einen Binder mit einem Masseanteil von max. 10 %, bevorzugt max. 7 %, besonders bevorzugt max. 5 % aufweisen, der bevorzugt keine Bi-Komponentenfasern, besonders bevorzugt keine Schmelzfasern, aufweist und beispielsweise ein Acrylatbinder ist. Ein hoher Glasfaseranteil ermöglicht einen guten Abscheidegrad bei für Druckluftsysteme ausreichender Stabilität.

In einer bevorzugten Ausführungsform ist vorgesehen, dass die Fasern des Koaleszenzfiltermediums hydrophobe und/oder oleophobe Eigenschaften aufweisen. Die abweisende Ausrüstung der Fasern oder eines Teils der Fasern kann dazu beitragen, die Drainage und den Druckverlust im ölgesättigten Zustand zu verbessern.

In einer bevorzugten Ausführungsform ist vorgesehen, dass mindestens 90 %, bevorzugt mindestens 95 % der Glasfasern des Koaleszenzfiltermediums einen Faserdurchmesser größer 0,5 µm, bevorzugt größer 1 µm aufweisen. Ferner ist bevorzugt, dass mindestens 90 %, bevorzugt mindestens 95 % der Glasfasern des Koaleszenzfiltermediums einen Faserdurchmesser kleiner 10 µm, bevorzugt kleiner 8 µm aufweisen. So kann ein Mehrlagenaufbau mit einer für die Abscheidung von Öl aus Druckluft optimierten Struktur bereitgestellt werden.

In einer bevorzugten Ausführungsform ist vorgesehen, dass die feinste Abscheidestufe des Koaleszenzabscheiders durch den Mehrlagenaufbau und/oder das Koaleszenzfiltermedium gebildet ist. Als Feinheit wird in diesem Zusammenhang die dickenbezogene, insbesondere durch Faserdurchmesser und Porengröße und/oder Luftdurchlässigkeit bestimmte, Abscheideeffizienz verstanden. Der Verzicht auf feinere Lagen wird durch die vorstehend beschriebenen Eigenschaften ermöglicht und kann zu einem bezogen auf die Abscheideleistung und den Bauraum optimierten Druckverlust beitragen. Daher ist es bevorzugt, wenn der Mehrlagenaufbau und/oder das Koaleszenzfiltermedium die die Effizienz des Koaleszenzabscheiders zumindest überwiegend bestimmende Abscheidestufe bilden.

In einer bevorzugten Ausführungsform ist reinseitig des Mehrlagenaufbaus des Koaleszenzfiltermediums eine im Vergleich zum Koaleszenzfiltermedium offenporige Drainagelage, bevorzugt ein Drainagevlies angeordnet. Bevorzugt ist bei einem gewickelten Mehrlagenaufbau dieser für eine Durchströmung von innen nach außen von einem offenporigen Drainagevlies umgeben, oder für eine Durchströmung von außen nach innen umgibt der Mehrlagenaufbau das Drainagevlies. Im ersten Fall ist das Drainagevlies bevorzugt unbeabstandet bzw. zwischenraumfrei zu/von dem Mehrlagenaufbau angeordnet und deckt dessen Fläche weiter bevorzugt vollständig ab. Bei einer Durchströmung von außen nach innen ist das Drainagevlies bevorzugt innerhalb und beabstandet vom Mehrlagenaufbau angeordnet. D. h. im Falle eines gewickelten Mehrlagenaufbaus erstreckt sich das Drainagevlies bevorzugt über den gesamten Umfang und die gesamte axiale Länge des Mehrlagenaufbaus. Das Drainagevlies trägt dazu bei, die abgeschiedene Flüssigkeit abzudrainieren, ohne dass bereits abgeschiedene Flüssigkeit durch die Strömung mitgerissen wird, und es kann derart mitgerissene Tröpfchen abfangen. Alternativ zum Drainagevlies kann als Drainagelage auch offenporiger Schaum oder mehrlagig aufgewickeltes Spinnvlies verwendet werden. Die Drainagelage weist bevorzugt auf eine Flächenmasse zwischen 100 g/m² und 300 g/m², bevorzugt zwischen 200 g/m² und 250 g/m². Die Drainagelage weist weiter bevorzugt auf eine Dicke von 3 - 10 mm, bevorzugt 4 - 6 mm. Die Drainagelage weist weiter bevorzugt auf eine Luftdurchlässigkeit zwischen 2000 l/m²s und 4000 l/m²s, bevorzugt zwischen 2500 l/m²s und 4000 l/m²s. Bevorzugt wird ein Polyester-Material für die Drainagelage, insbesondere für das Drainagevlies verwendet. Besonders bevorzugt sind Stapelfaservliese, insbesondere vernadelt, geklebt, kalandriert, oder durch andere Verfahren verfestigt. Die Dicke ist bei der Drainagelage vorliegend nach DIN EN ISO 9073-2 bei 0,5 kPa gemessen.

Der erfindungsgemäße Koaleszenzabscheider wird bevorzugt als die erste, aus Fasern, insbesondere Glasfasern, aufgebaute Abscheidestufe verwendet, die der Schraube eines Schraubenkompressors nachgeschaltet ist. Er dient damit als Hauptabscheider und wird mit dem gesamten Ölgehalt beaufschlagt, der nicht zuvor durch Wirbel- oder Prallabscheidung im Leitungssystem und Druckbehälter abgeschieden wurde. Der erfindungsgemäße Koaleszenzabscheider ist bevorzugt als Koaleszenzabscheiderwechseleinsatz zum auswechselbaren Einbau in einen Druckbehälter eines Druckluftkompressors ausgebildet.

Die Erfindung betrifft ferner ein Kompressordruckluftsystem umfassend einen Druckbehälter für Stationärkompressoren oder ein als Wechselfilter ausgebildetes, auf einem Anschlusskopf montierbares Abscheiderpatronengehäuse (insbesondere ein sogenanntes Spin-on-Gehäuse), weiter umfassend einen erfindungsgemäßen Koaleszenzabscheider, der in dem Druckbehälter auswechselbar oder in dem Abscheiderpatronengehäuse mit diesem zusammen auswechselbar angeordnet ist.

Die Erfindung betrifft ferner die Verwendung eines erfindungsgemäßen Koaleszenzabscheiders als Öl-Hauptabscheider stromab eines Schraubenkompressors, bevorzugt in einem Kompressordruckluftsystem, bevorzugt mit einem stromab des Koaleszenzabscheiders angeordneten, Feinkoaleszenzabscheider zur Nachabscheidung von verbliebenem Öl im Druckluftstrom, wobei der Feinkoaleszenzabscheider bevorzugt separat, d. h. in einem separaten Gehäuse und/oder Leitungsabschnitt, angeordnet ist.

Zur Bestimmung vorteilhafter Eigenschaften des vorliegend beschriebenen Koaleszenzfiltermediums haben sich nachstehende Normen und Messverfahren als geeignet erwiesen. Angegebene Werte sind mit diesen Vorschriften bestimmt bzw. bestimmbar: Materialdicke analog ISO 534, jedoch mit einer Belastung von 10kPa; Flächenmasse nach DIN EN ISO 536; Luftdurchlässigkeit nach DIN EN ISO 9237 bei 200Pa (Gesamtluftdurchlässigkeit entspricht der Luftdurchlässigkeit der Einzellage dividiert durch die Lagenanzahl).

### Kurze Beschreibung der Zeichnungen

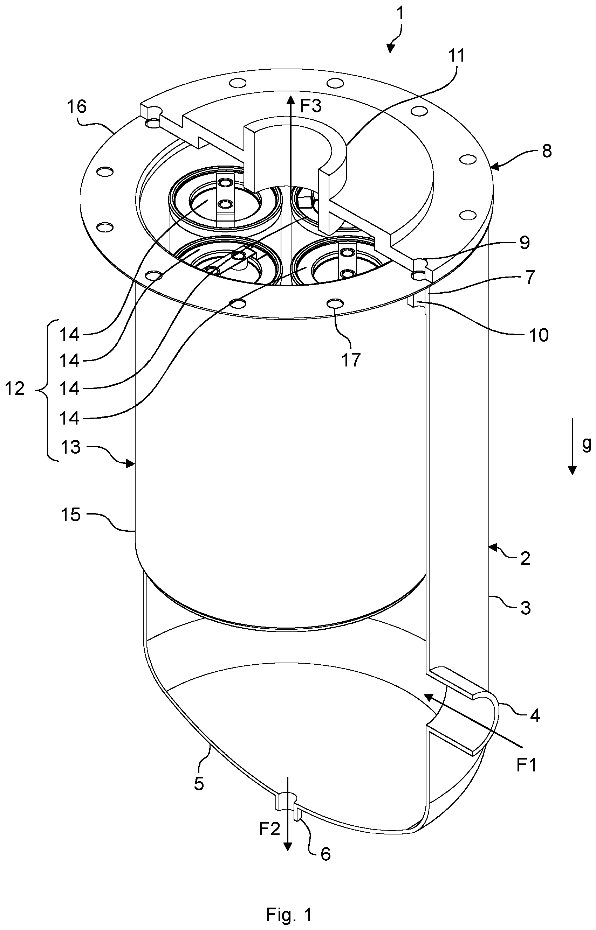

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend unter anderem anhand des durch die Figuren 1 bis 4 veranschaulichten Ausführungsbeispiels sowie weiterer Beispiele näher erläutert. Es zeigen dabei:
- Fig. 1:: eine schematische perspektivische Teilschnittansicht einer Ausführungsform eines Fluidabscheiders;
- Fig. 2:: eine zweite schematische perspektivische Teilschnittansicht der Fluidabscheideranordnung gemäß Fig. 1;
- Fig. 3:: eine schematische Aufsicht eines Koaleszenzabscheiderwechseleinsatzes, welches in einem Fluidabscheider gem. Fig. 1 verwendbar ist;
- Fig. 4:: eine schematische Schnittansicht des Koaleszenzabscheiderwechseleinsatzes gem. Fig. 3.

In den Figuren sind gleiche oder funktionsgleiche Elemente, sofern nichts anderes angegeben ist, mit denselben Bezugszeichen versehen worden.

### Ausführungsform(en) der Erfindung

Die Fig. 1 zeigt eine schematische perspektivische Teilschnittansicht einer Ausführungsform eines Ölabscheiders oder Fluidabscheiders 1. Der Fluidabscheider 1 arbeitet nach dem Koaleszenzabscheider-Prinzip, bei welchem Flüssigkeitströpfchen aus einem Gasstrom sich an den Fasern eines faserigen Koaleszenzfiltermediums anlagern, sich dort zu größeren Tröpfchen verbinden (koaleszieren) und durch Schwerkraft abdrainieren. Der Fluidabscheider 1 ist dazu eingerichtet, ein flüssiges Fluid, beispielsweise Öl, aus einem gasförmigen Fluid, beispielsweise komprimierter Luft, abzutrennen. Der Fluidabscheider 1 kann einem Schraubenkompressor oder Schraubenverdichter zugeordnet sein oder Teil eines Schraubenkompressors oder Schraubenverdichters sein.

Der Fluidabscheider 1 umfasst einen Druckluftkessel 2 mit einer rohrförmigen Wandung 3, die im Querschnitt kreisrund sein kann. An der Wandung 3 kann ein Fluideinlass 4 vorgesehen sein. Der Fluideinlass 4 kann rohrförmig mit einem kreisrunden Querschnitt ausgebildet sein. Der Fluideinlass 4 durchbricht die Wandung 3. Über den Fluideinlass 4 kann dem Fluidabscheider 1 ein Fluid F1, beispielsweise ein Öl-/Luftgemisch, radial oder auch tangential zugeführt werden. Das Fluid F1 kann dabei dem Fluidabscheider 1 von dem zuvor erwähnten Schraubenverdichter zugeführt werden.

Stirnseitig ist der Druckluftkessel 2 unten mit Hilfe eines gewölbten, insbesondere kugelkalottenförmig gewölbten, Bodens 5 abgeschlossen. Der Boden 5 und die Wandung 3 können materialeinstückig ausgebildet sein. Mittig an dem Boden 5 kann ein Fluidauslass 6 vorgesehen sein. Über den Fluidauslass 6 kann ein Fluid F2, beispielsweise Öl, das aus dem Fluid F1 abgeschieden ist, abgeführt oder abgesaugt werden. Der Druckluftkessel 2 umfasst weiterhin an einem dem Boden 5 abgewandten Endabschnitt der Wandung 3 einen Verbindungsflansch 7, der ringförmig ausgebildet sein kann.

Der Fluidabscheider 1 weist ferner einen Deckel 8 auf, der lösbar mit dem Verbindungsflansch 7 des Druckluftkessels 2 verbunden ist. Beispielsweise ist der Deckel 8 mit Hilfe von Schrauben mit dem Verbindungsflansch 7 verbunden. Hierzu können beispielsweise an dem Deckel 8 entsprechende Bohrungen 9 und an dem Verbindungsflansch 7 zu den Bohrungen 9 korrespondierende Gewindebohrungen 10 vorgesehen sein.

Mittig an dem Deckel 8 ist ein rohrförmiger Fluidauslass 11 vorgesehen. Über den Fluidauslass 11 kann ein Fluid F3, beispielsweise gereinigte komprimierte Luft, aus dem das Fluid F2 abgeschieden wurde, abgeführt werden. Beispielsweise kann das Fluid F3 einem Druckluftsystem und dort angeschlossenen Verbrauchern zugeführt werden. In einer Schwerkraftrichtung g ist der Fluidauslass 11 bevorzugt oberhalb des Fluideinlasses 4 und des Fluidauslasses 6 angeordnet.

Der Fluidabscheider 1 umfasst weiterhin eine Koaleszenzabscheideranordnung 12, insbesondere eine Ölabscheideranordnung, die als Koaleszenzabscheider ausgebildet ist. Die Koaleszenzabscheideranordnung 12 umfasst beispielsweise, wie im vorliegenden Ausführungsbeispiel vorgesehen, ein topfförmiges Filtergehäuse 13, welches ein Zwischengehäuse innerhalb des Druckluftkessels 2 bildet, sowie mehrere in dem Filtergehäuse 13 aufgenommene Koaleszenzabscheiderwechseleinsätze 14. Die Koaleszenzabscheiderwechseleinsätze 14 können auch als Koaleszenzabscheiderelemente, Koaleszierelemente, Abscheiderelemente insbesondere Ölabscheiderelemente oder Filterelemente bezeichnet werden. Die Anzahl der Koaleszenzabscheiderwechseleinsätze 14 ist beliebig. Beispielsweise können, wie in der Fig. 1 gezeigt, vier derartige Koaleszenzabscheiderwechseleinsätze 14 vorgesehen sein. Alternativ können beispielsweise auch zwei, drei, vier, fünf oder mehr Koaleszenzabscheiderwechseleinsätze 14 oder es kann auch nur ein derartiger Koaleszenzabscheiderwechseleinsatz 14 vorgesehen sein.

Das Filtergehäuse 13 umfasst eine rohrförmige Wandung 15, die im Querschnitt eine kreisförmige Geometrie aufweisen kann. An einem Endabschnitt der Wandung 15 ist ein Verbindungsflansch 16 vorgesehen, der zwischen dem Deckel 8 und dem Verbindungsflansch 7 des Druckluftkessels 2 angeordnet ist. Das heißt, der Verbindungsflansch 16 kann zwischen dem Deckel 8 und dem Verbindungsflansch 7 des Druckluftkessels 2 eingeklemmt sein. In dem Verbindungsflansch 16 können zu den Bohrungen 9 des Deckels 8 und den Gewindebohrungen 10 des Verbindungsflansches 7 korrespondierende Bohrungen 17 vorgesehen sein.

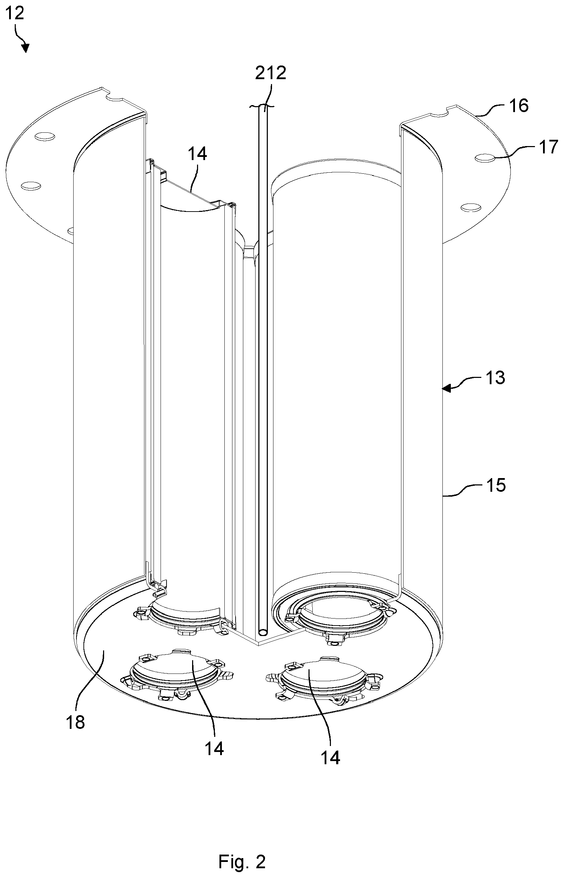

Die Fig. 2 zeigt eine schematische, perspektivische Teilschnittansicht der Koaleszenzabscheideranordnung 12. An einem dem Verbindungsflansch 16 abgewandten Endabschnitt der Wandung 15 ist eine Filterelementadapterplatte 18 vorgesehen, an der die Koaleszenzabscheiderwechseleinsätze 14 befestigt sind. Die Filterelementadapterplatte 18 kann unlösbar oder lösbar, das heißt, austauschbar, mit dem Filtergehäuse 13 verbunden sein. Beispielsweise ist die Filterelementadapterplatte 18 in die rohrförmige Wandung 15 eingeschraubt oder beispielsweise mit Hilfe eines Bajonettverschlusses mit dieser verbunden. Die Filterelementadapterplatte 18 ist fluiddicht mit der Wandung 15 verbunden. Das heißt, zwischen der Filterelementadapterplatte 18 und der Wandung 15 kann kein Fluid hindurchtreten. Die Anordnung mit einer Mehrzahl von Koaleszenzabscheiderwechseleinsätzen 14 ist beispielhaft für die vorliegende Erfindung. Statt einer Adapterplatte 18 mit einer Mehrzahl von Koaleszenzabscheiderwechseleinsätzen 14 kann auch ein einziger Koaleszenzabscheiderwechseleinsatz in der Größe und mit der Flanschkonfiguration der Adapterplatte 18 verwendet werden, wie im Stand der Technik ebenfalls üblich.

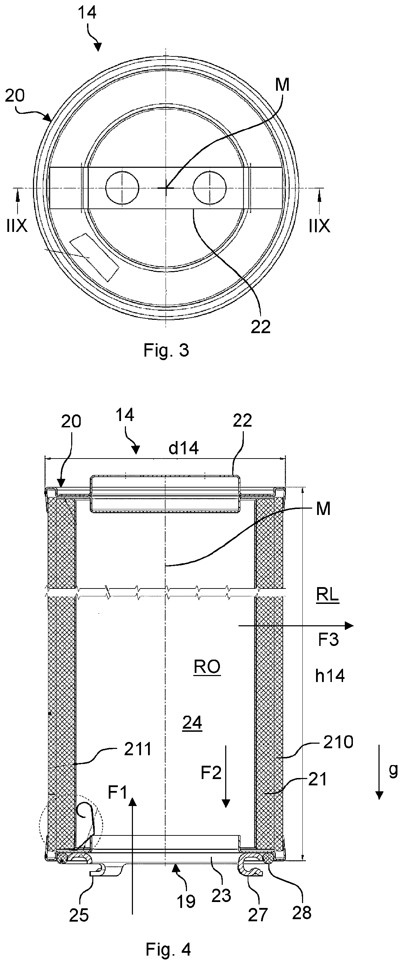

Die Fig. 3 zeigt eine schematische Aufsicht auf den Koaleszenzabscheiderwechseleinsatz 14, und die Fig. 4 zeigt eine schematische Schnittansicht des Koaleszenzabscheiderwechseleinsatzes 14. Nachfolgend wird auf die Fig. 3 und 4 gleichzeitig Bezug genommen.

Der Koaleszenzabscheiderwechseleinsatz 14 kann rotationssymmetrisch zu einer Mittel- oder Symmetrieachse M aufgebaut sein. Der Koaleszenzabscheiderwechseleinsatz 14 umfasst eine erste Endscheibe 19, die in den Fig. 3 und 4 in verschiedenen Ansichten gezeigt ist, und eine zweite Endscheibe 20. Die erste Endscheibe 19 und die zweite Endscheibe 20 können beispielsweise aus einem Metallwerkstoff, insbesondere Stahl, oder aus einem Kunststoffmaterial gefertigt sein. Bevorzugt sind die Endscheiben 19, 20 jeweils aus einem Metallblech, insbesondere Stahlblech, gefertigt.

Zwischen der ersten Endscheibe 19 und der zweiten Endscheibe 20 ist ein Koaleszenzfiltermedium 21 in einem gewickelten Mehrlagenaufbau angeordnet. Als Mehrlagenaufbau wird ein Aufbau bezeichnet, bei welchem mehrere Lagen des Koaleszenzfiltermediums direkt, unbeabstandet aufeinander gelegt, bevorzugt gewickelt, sind, so dass ein quer zur Lagenerstreckung im Wesentlichen gleichförmiger, faseriger Körper entsteht. Das Koaleszenzfiltermedium 21 ist dabei vorzugsweise nicht gefaltet, sondern glatt. Bevorzugt kann das Koaleszenzfiltermedium 21 ein insbesondere gewickeltes Glasfaservlies oder Glasfaserpapier sein. Die Glasfasern sind bevorzugt Mikroglasfasern. Die erste Endscheibe 19 und die zweite Endscheibe 20 können mit dem Koaleszenzfiltermedium 21 verklebt oder anderweitig verbunden sein. Der Koaleszenzabscheiderwechseleinsatz 14 kann beispielsweise eine Höhe h14 von etwa 500 mm und einen Durchmesser d14 von etwa 150 mm aufweisen. Die zweite Endscheibe 20 umfasst bevorzugt wie gezeigt einen Handgriff 22 zum Handhaben des Koaleszenzabscheiderwechseleinsatzes 14. Der Mehrlagenaufbau des Koaleszenzfiltermediums 14 ist reinseitig von einem im Vergleich zum Koaleszenzfiltermedium offenporigen Drainagevlies 210 umgeben, welches bevorzugt unbeabstandet bzw. zwischenraumfrei von dem Mehrlagenaufbau angeordnet ist und diesen vollständig umgibt. Das Drainagevlies trägt dazu bei, die abgeschiedene Flüssigkeit abzudrainieren, ohne dass bereits abgeschiedene Flüssigkeit durch die Strömung mitgerissen wird, und kann derart mitgerissene Tröpfchen abfangen. Bei einer bestimmungsgemäßen Durchströmung von außen nach innen, die erfindungsgemäß ebenso möglich ist, ist das Drainagevlies 210 innerhalb des Mehrlagenaufbaus des Koaleszenzfiltermediums 14 angeordnet.

Wie die Fig. 4 zeigt, umfasst der Koaleszenzabscheiderwechseleinsatz 14 eine Rohseite RO und eine von der Rohseite RO mit Hilfe des Koaleszenzfiltermediums 21 getrennte Reinseite RL. Das zu filternde Fluid F1 strömt dabei von der Rohseite RO durch das Koaleszenzfiltermedium 21 zur Reinseite RL, wobei mit Hilfe des Koaleszenzfiltermediums 21 das Fluid F2, insbesondere Öl, aus dem Fluid F1, insbesondere (Druck-)luft-ÖI-Gemisch, abgeschieden und abdrainiert wird, so dass gereinigtes Fluid F3, insbesondere gereinigte (Druck-)Luft, durch das Koaleszenzfiltermedium 21 hindurch auf die Reinseite RL tritt. Das Fluid F2 wird in dem Koaleszenzfiltermedium 21 in kleinen Tröpfchen, die sich an den Fasern anlagern, abgeschieden. Die kleinen Tröpfchen koaleszieren zu größeren Tropfen, die wiederum entlang und in dem Koaleszenzfiltermedium 21 sowie entlang und in dem Drainagevlies 210 in der Schwerkraftrichtung g nach unten fließen. Das abgeschiedene Fluid F2 verbleibt daher nicht im Koaleszenzfiltermedium 21, sondern läuft nach unten ab und sammelt sich beispielsweise auf der Filterelement-Adapterplatte 18 des Filtergehäuses 13, wobei das Fluid F2 mit einer Drainageleitung 212 abgesaugt werden kann. Die erste Endscheibe 19 umfasst eine Fluideinströmöffnung 23 (eine Durchströmung in entgegengesetzte Richtung ist möglich), die rotationssymmetrisch zu der Symmetrieachse M ausgebildet sein kann. Durch die Fluideinströmöffnung 23 kann das Fluid F1 in einen Innenraum 24 des Filterelements 14 eintreten. Ferner kann das Fluid F2 durch die Fluideinströmöffnung 23 aus dem Filterelement 14, aber auch über den äußeren Rand der unteren, ersten Endscheibe 19, austreten. Die erste Endscheibe 19 weist ferner bevorzugt zumindest drei ungleichmäßig um die Fluideinströmöffnung 23 herum verteilte Befestigungselemente 25 bis 27 zur Befestigung an der Filterelementadapterplatte 18 auf. Die Anzahl der Befestigungselemente 25 bis 27 ist beliebig. Vorzugsweise sind jedoch zumindest drei derartige Befestigungselemente 25 bis 27 vorgesehen. Es können allerdings auch vier, fünf oder mehr derartige Befestigungselemente 25 bis 27 vorgesehen sein.

Die erste bzw. offene Endscheibe 19 kann ferner ein Dichtelement 28, beispielsweise einen O-Ring, aufweisen, um die erste Endscheibe 19 fluiddicht gegenüber der Filterelementadapterplatte 18 oder einem Flansch des Druckluftkessels 2 abzudichten. Die Befestigungselemente 25 bis 27 sind dazu eingerichtet, die Filterelementadapterplatte 18 formschlüssig zu hintergreifen. Eine formschlüssige Verbindung entsteht durch das Ineinander- oder Hintergreifen von mindestens zwei Verbindungspartnern, in diesem Fall den Befestigungselementen 25 bis 27 und der Filterelementadapterplatte 18.

Die Befestigungselemente 25 bis 27 können ungleichmäßig oder unsymmetrisch um die Fluideinströmöffnung 23 auf einem Kreis herum verteilt angeordnet sein.

### Beispiele

Es wurden Ausführungsformen eines erfindungsgemäßen Koaleszenzabscheiders mit einem kombinierten, zweistufigen Aufbau verglichen. Dabei wurden bei gleichen äußeren Abmaßen verschiedene Koaleszenzfiltermedien verwendet. Abscheidegrade wurden anhand von einem Aerosol mit einer volumengewichteten mittleren Tropfengröße von ca. 1,1 µm ermittelt. Dabei wird deutlich, dass beim Vergleichsbeispiel zur Erfüllung der Marktanforderungen bei gleichen Abmessungen ein deutlich höherer Druckverlust akzeptiert werden muss.

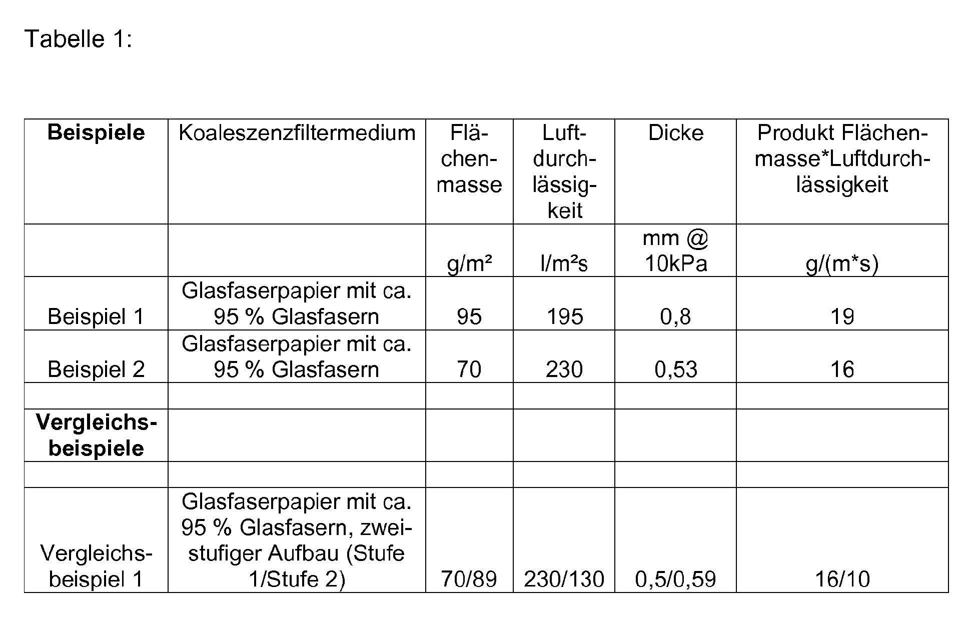

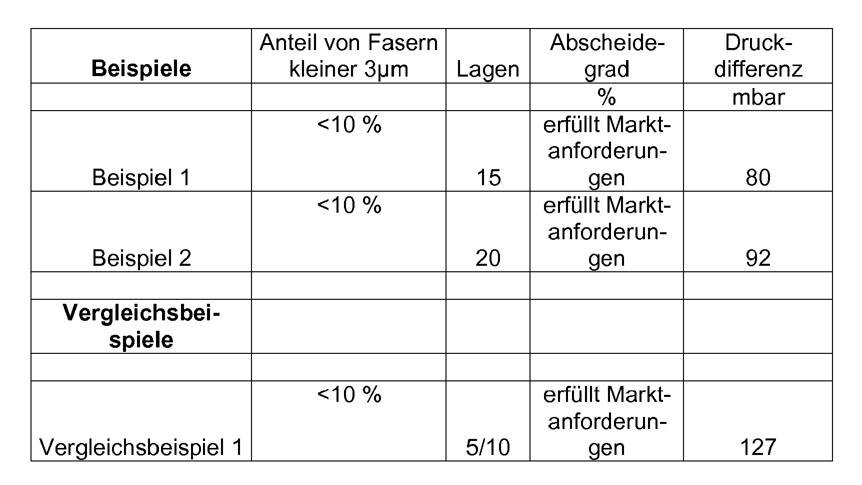

In den Beispielen 1 und 2 in Tabelle 1 wurden die beschriebenen Mehrlagenaufbauten als einzige Hauptabscheidestufe verwendet, d. h. die Koaleszenzabscheider wiesen keine feinere Abscheidestufe auf. Im Vergleichsbeispiel 1 wurde eine vergleichsweise offene Lage mit einer vergleichsweise feinen Lage in einem sogenannten zweistufigen Aufbau kombiniert. Alle Aufbauten wurden so eingestellt, dass sie einen Abscheidegrad erfüllen, der Marktanforderungen erfüllt und dann hinsichtlich des Druckverlustes verglichen. Überraschend konnten in den Beispielen 1 und 2, ohne dass eine feine Stufe wie im Vergleichsbeispiel mit einer geringeren Luftdurchlässigkeit (im Vergleichsbeispiel 130 l/m²s) verwendet wurde, die Anforderungen an den Abscheidegrad erfüllt und Verbesserungen im Druckverlust erzielt werden, bei akzeptablen Stapelabmessungen.

## Patentansprüche

1. Koaleszenzabscheider zur Abscheidung von Flüssigkeitströpfchen aus einem Gasstrom, insbesondere zur Verwendung als Ölhauptabscheider eines Ölabscheidesystems eines Schraubenkompressors, insbesondere für Ölkonzentrationen von mindestens 0,1 g/m³ (Volumen bezogen auf Standardbedingungen), umfassend als feinste Stufe einen zwischen dem Gaseinlass und dem Gasauslass anordenbaren, insbesondere gewickelten, einen Hohlraum umschließenden Mehrlagenaufbau eines Koaleszenzfiltermediums, **dadurch gekennzeichnet, dass** das Produkt aus Luftdurchlässigkeit und Flächenmasse des Koaleszenzfiltermediums mindestens 16 g/m*s, insbesondere mindestens 18 g/m*s, bevorzugt mindestens 25 g/m*s, weiter bevorzugt mindestens 35 g/m*s und maximal 100 g/m*s, bevorzugt maximal 80 g/m*s, besonders bevorzugt maximal 50 g/m*s beträgt.

2. Koaleszenzabscheider nach Anspruch 1, wobei das Koaleszenzfiltermedium als Glasfaserpapier ausgebildet ist.

3. Koaleszenzabscheider nach einem der vorhergehenden Ansprüche, wobei der Mehrlagenaufbau dichtend zwischen zwei Endscheiben zur seitlichen Abdichtung befestigt ist.

4. Koaleszenzabscheider nach einem der vorhergehenden Ansprüche, wobei die Einzellagendicke des Koaleszenzfiltermediums mehr als 0.1 mm, insbesondere mehr als 0.3 mm, bevorzugt mehr als 0.4 mm, besonders bevorzugt mehr als 0.6 mm und maximal 2 mm, insbesondere maximal 1mm, bevorzugt maximal 0.8 mm beträgt.

5. Koaleszenzabscheider nach einem der vorhergehenden Ansprüche, wobei die Flächenmasse der Einzellage des Koaleszenzfiltermediums größer 40 g/m², bevorzugt größer 50 g/m², besonders bevorzugt größer 70 g/m² und kleiner 200 g/m², bevorzugt kleiner 150 g/m², besonders bevorzugt kleiner 100 g/m² beträgt.

6. Koaleszenzabscheider nach einem der vorhergehenden Ansprüche, wobei das Koaleszenzfiltermedium eine Masse zu Volumen-Verhältnis von kleiner 170 kg/m³, insbesondere kleiner 150 kg/m³, bevorzugt kleiner 140 kg/m³, besonders bevorzugt kleiner 120 kg/m³ und größer 80 kg/m³, insbesondere größer 100 kg/m³, bevorzugt größer 110 kg/m³ aufweist.

7. Koaleszenzabscheider nach einem der vorhergehenden Ansprüche, wobei das Koaleszenzfiltermedium eine Luftdurchlässigkeit der Einzellage von mehr als 180 l/m²s, insbesondere mehr als 200 l/m²s, bevorzugt mehr als 300 l/m²s, besonders bevorzugt mehr als 400 l/m²s und maximal 1500 l/m²s, insbesondere maximal 1000 l/m²s, bevorzugt maximal 750 l/m²s, besonders bevorzugt maximal 500 l/m²s aufweist.

8. Koaleszenzabscheider nach einem der vorhergehenden Ansprüche, wobei der Mehrlagenaufbau zwischen 2 und 80, insbesondere zwischen 10 und 30 bevorzugt unmittelbar aufeinander angeordnete Lagen des Koaleszenzfiltermediums aufweist, die entweder gestapelt oder gewickelt sind.

9. Koaleszenzabscheider nach einem der vorhergehenden Ansprüche, wobei das Koaleszenzfiltermedium einschichtig ist, wobei die eine Schicht bevorzugt homogen ist.

10. Koaleszenzabscheider nach einem der vorhergehenden Ansprüche, wobei die Gesamtdicke des Mehrlagenaufbaus mindestens 8 mm, bevorzugt mindestens 10 mm, besonders bevorzugt mindestens 12 mm und maximal 60 mm, bevorzugt maximal 50 mm, besonders bevorzugt maximal 25 mm beträgt.

11. Koaleszenzabscheider nach einem der vorhergehenden Ansprüche, wobei die Gesamtluftdurchlässigkeit des Mehrlagenaufbaus kleiner 100 l/m²s, insbesondere kleiner 70 l/m²s, bevorzugt kleiner 50 l/m²s und besonders bevorzugt kleiner 30 l/m²s beträgt.

12. Koaleszenzabscheider nach einem der vorhergehenden Ansprüche, das Koaleszenzfiltermedium aufweisend Glasfasern im Koaleszenzfiltermedium, die einen Massenanteil von mindestens 50 %, insbesondere 90 %, bevorzugt mindestens 93 %, besonders bevorzugt mindestens 95 % aufweisen.

13. Koaleszenzabscheider nach einem der vorhergehenden Ansprüche, wobei der Masseanteil veraschbarer Materialien im Koaleszenzfiltermedium max. 10%, bevorzugt max. 7 %, besonders bevorzugt max. 5 % beträgt.

14. Koaleszenzabscheider nach einem der vorhergehenden Ansprüche, wobei das Koaleszenzfiltermedium einen Binder mit einem Masseanteil von max. 10 %, bevorzugt max. 7 %, besonders bevorzugt max. 5 % aufweist, der bevorzugt keine Bi-Komponentenfasern, besonders bevorzugt keine Schmelzfasern, aufweist und beispielsweise ein Acrylatbinder ist.

15. Koaleszenzabscheider nach einem der vorhergehenden Ansprüche, das Koaleszentfiltermedium aufweisend Fasern, wobei die Fasern des Koaleszenzfiltermediums hydrophobe und/oder oleophobe Eigenschaften aufweisen.

16. Koaleszenzabscheider nach einem der vorhergehenden Ansprüche, das Koaleszenzfiltermedium aufweisend Glasfasern, wobei mindestens 90 %, bevorzugt mindestens 95 % der Glasfasern des Koaleszenzfiltermediums einen Faserdurchmesser größer 0,5 µm, bevorzugt größer 1 µm aufweisen.

17. Koaleszenzabscheider nach einem der vorhergehenden Ansprüche, das Koaleszenzfiltermedium aufweisend Glasfasern, wobei mindestens 90 %, bevorzugt mindestens 95 % der Glasfasern des Koaleszenzfilter-mediums einen Faserdurchmesser kleiner 10 µm, bevorzugt kleiner 8 µm, besonders bevorzugt kleiner 6 µm aufweisen.

18. Koaleszenzabscheider nach einem der vorhergehenden Ansprüche, der als erste aus Fasern, insbesondere Glasfasern, aufgebaute Abscheidestufe der Schraube eines Schraubenkompressors nachgeschaltet ist.

19. Kompressordruckluftsystem, umfassend einen Druckbehälter für Stationärkompressoren oder ein als Wechselfilter ausgebildetes, auf einem Anschlusskopf montierbares Abscheiderpatronengehäuse, weiter umfassend einen Koaleszenzabscheider nach einem der vorhergehenden Ansprüche, der in dem Druckbehälter auswechselbar oder in dem Abscheiderpatronengehäuse mit diesem zusammen auswechselbar angeordnet ist.

20. Verwendung eines Koaleszenzabscheiders nach einem der vorhergehenden Ansprüche 1 bis 19 zur Abscheidung von Flüssigkeitströpfchen aus einem Gasstrom, insbesondere als Öl-Hauptabscheider stromab eines Schraubenkompressors, bevorzugt in einem Kompressordruckluftsystem nach dem vorhergehenden Anspruch, bevorzugt mit einem stromab des Koaleszenzabscheiders angeordneten Feinkoaleszenzabscheider zur Nachabscheidung von verbliebenem Öl im Druckluftstrom.

## Claims

1. Coalescence separator for separating liquid droplets from a gas flow, in particular for using it as an oil main separator of an oil separation system of a screw compressor, in particular for oil concentrations of at least 0.1 g/m³ (volume based on standard conditions), comprising as the finest stage a multilayer structure, in particular wound, of a coalescing filter medium which can be disposed between the gas inlet and the gas outlet and enclosing a cavity, **characterized in that** the product of air permeability and grammage of the coalescing filter medium amounts to at least 16 g/m*s, in particular to at least 18 g/m*s, preferably to at least 25 g/m*s, further preferably to at least 35 g/m*s and is at most 100 g/m*s, preferably at most 80 g/m*s, particularly preferably at most 50 g/m*s.

2. Coalescence separator according to claim 1, wherein the coalescing filter medium is designed as glass fiber paper.

3. Coalescence separator according to one of the preceding claims, wherein the multilayer structure is sealingly attached between two end discs for laterally sealing.

4. Coalescence separator according to one of the preceding claims, wherein the single layer thickness of the coalescing filter medium amounts to more than 0.1 mm, in particular to more than 0.3 mm, preferably to more than 0.4 mm, particularly preferably to more than 0.6 mm and to a maximum of 2 mm, in particular to a maximum of 1 mm, preferably to a maximum of 0.8 mm.

5. Coalescence separator according to one of the preceding claims, wherein the grammage of the single layer of the coalescing filter medium is greater than 40 g/m², preferably greater than 50 g/m², particularly preferably greater than 70 g/m² and less than 200 g/m², preferably less than 150 g/m², particularly preferably less than 100 g/m².

6. Coalescence separator according to one of the preceding claims, wherein the coalescing filter medium features a mass to volume ratio of less than 170 kg/m³, in particular less than 150 kg/m³, preferably less than 140 kg/m³, particularly preferably less than 120 kg/m³ and greater than 80 kg/m³, in particular greater than 100 kg/m³, preferably greater than 110 kg/m³.

7. Coalescence separator according to one of the preceding claims, wherein the coalescing filter medium features an air permeability of the single layer of more than 180 l/m²s, in particular more than 200 l/m²s, preferably more than 300 l/m²s, particularly preferably more than 400 l/m²s and a maximum of 1500 l/m²s, in particular a maximum of 1000 l/m²s, preferably a maximum of 750 l/m²s, particularly preferably a maximum of 500 l/m²s.

8. Coalescence separator according to one of the preceding claims, wherein the multilayer structure features between 2 and 80, in particular between 10 and 30 layers preferably directly arranged one above the other of the coalescing filter medium, which are either stacked or wound.

9. Coalescence separator according to one of the preceding claims, wherein the coalescing filter medium is made of a single layer, wherein the single layer is preferably homogeneous.

10. Coalescence separator according to one of the preceding claims, wherein the total thickness of the multilayer structure amounts to at least 8 mm, preferably to at least 10 mm, particularly preferably to at least 12 mm and to a maximum of 60 mm, preferably to a maximum of 50 mm, particularly preferably to a maximum of 25 mm.

11. Coalescence separator according to one of the preceding claims, wherein the total air permeability of the multilayer structure is less than 100 l/m²s, in particular less than 70 l/m²s, preferably less than 50 l/m²s and particularly preferably less than 30 l/m²s.

12. Coalescence separator according to one of the preceding claims, wherein the coalescing filter medium features glass fibers in the coalescing filter medium featuring a mass proportion of at least 50 %, in particular 90 %, preferably at least 93 %, particularly preferably at least 95 %.

13. Coalescence separator according to one of the preceding claims, wherein the mass proportion of incinerable material in the coalescing filter medium amounts to a maximum of 10 %, preferably to a maximum of 7 %, particularly preferably to a maximum of 5 %.

14. Coalescence separator according to one of the preceding claims, wherein the coalescing filter medium features a binder having a mass proportion of at most 10 %, preferably of at most 7 %, particularly preferably of at most 5 %, which preferably features no bi-component fibers, particularly preferably no melt fibers, and is for example an acrylate binder.

15. Coalescence separator according to one of the preceding claims, wherein the coalescing filter medium features fibers, wherein the fibers of the coalescing filter medium feature hydrophobic and/or oleophobic properties.

16. Coalescence separator according to one of the preceding claims, wherein the coalescing filter medium features glass fibers, wherein at least 90 %, preferably at least 95 % of the glass fibers of the coalescing filter medium feature a fiber diameter greater than 0.5 µm, preferably greater than 1 µm.

17. Coalescence separator according to one of the preceding claims, wherein the coalescing filter medium features glass fibers, wherein at least 90 %, preferably at least 95 % of the glass fibers of the coalescing filter medium feature a fiber diameter smaller than 10 µm, preferably smaller than 8 µm, particularly preferably smaller than 6 µm.

18. Coalescence separator according to one of the preceding claims, which is disposed downstream of the screw of a screw compressor as a first separating level made up of fibers, in particular glass fibers.

19. Compressor compressed air system, comprising a pressure vessel for stationary compressors or a separator cartridge housing designed as a spin-on filter and mountable on a connecting head, further comprising a coalescence separator according to one of the preceding claims, which is replaceably disposed in the pressure vessel or replaceably disposed in the separator cartridge housing together therewith.

20. Use of a coalescence separator according to one of the preceding claims 1 to 19 for separating liquid droplets from a gas flow, in particular as an oil main separator downstream of a screw compressor, preferably in a compressor compressed air system according to the preceding claim, preferably having a fine coalescence separator disposed downstream of the coalescence separator for subsequent separation of remaining oil in the compressed air stream.

## Revendications

1. Séparateur à coalescence destiné à séparer des gouttelettes de liquide d'un flux de gaz, notamment pour être utilisé comme séparateur d'huile principal d'un système de séparation d'huile d'un compresseur à vis, notamment pour des concentrations d'huile d'au moins 0,1 g/m³ (volume dans des conditions standard), comprenant, en tant que niveau le plus fin, une structure multicouche d'un milieu filtrant de coalescence enrobant un espace creux, notamment enroulée, pouvant être disposée entre l'entrée de gaz et la sortie de gaz, **caractérisé en ce que** le produit de la perméabilité à l'air et du grammage du milieu filtrant de coalescence est d'au moins 16 g/m*s, notamment d'au moins 18 g/m*s, de préférence d'au moins 25 g/m*s, de préférence encore d'au moins 35 g/m*s et au maximum 100 g/m*s, de préférence au maximum 80 g/m*s, de façon particulièrement préférée au maximum 50 g/m*s.

2. Séparateur à coalescence selon la revendication 1, le milieu filtrant de coalescence étant composé de papier à fibres de verre.

3. Séparateur à coalescence selon l'une quelconque des revendications précédentes, la structure multicouche étant fixée de manière étanche entre deux disques d'extrémité afin d'assurer l'étanchéité en sens latéral.

4. Séparateur à coalescence selon l'une quelconque des revendications précédentes, l'épaisseur des couches individuelles du milieu filtrant de coalescence étant supérieure à 0,1 mm, notamment supérieure à 0,3 mm, de préférence supérieure à 0,4 mm, de façon particulièrement préférée supérieure à 0,6 mm et au maximum 2 mm, notamment au maximum 1 mm, de préférence au maximum 0,8 mm.

5. Séparateur à coalescence selon l'une quelconque des revendications précédentes, le grammage des couches individuelles du milieu filtrant de coalescence étant supérieur à 40 g/m², de préférence supérieur à 50 g/m², de façon particulièrement préférée supérieur à 70 g/m² et inférieur à 200 g/m², de préférence inférieur à 150 g/m², de façon particulièrement préférée inférieur à 100 g/m².

6. Séparateur à coalescence selon l'une quelconque des revendications précédentes, le milieu filtrant de coalescence présentant un rapport masse/volume inférieur à 170 kg/m³, notamment inférieur à 150 kg/m³, de préférence inférieur à 140 kg/m³, de façon particulièrement préférée inférieur à 120 kg/m³ et supérieur à 80 kg/m³, notamment supérieur à 100 kg/m³, de préférence supérieur à 110 kg/m³.

7. Séparateur à coalescence selon l'une quelconque des revendications précédentes, le milieu filtrant de coalescence présentant une perméabilité à l'air des couches individuelles supérieure à 180 l/m²s, notamment supérieure à 200 l/m²s, de préférence supérieure à 300 l/m²s, de façon particulièrement préférée supérieure à 400 l/m²s et au maximum 1500 l/m²s, notamment au maximum 1000 l/m²s, de préférence au maximum 750 l/m²s, de façon particulièrement préférée au maximum 500 l/m²s.

8. Séparateur à coalescence selon l'une quelconque des revendications précédentes, la structure multicouche comportant entre 2 et 80, notamment entre 10 et 30 couches de milieu filtrant de coalescence de préférence directement superposées qui sont soit empilées soit enroulées.

9. Séparateur à coalescence selon l'une quelconque des revendications précédentes, le milieu filtrant de coalescence comprenant une couche et cette couche étant de préférence homogène.

10. Séparateur à coalescence selon l'une quelconque des revendications précédentes, l'épaisseur totale de la structure multicouche étant d'au moins 8 mm, de préférence d'au moins 10 mm, de façon particulièrement préférée d'au moins 12 mm et d'au maximum 60 mm, de préférence d'au maximum 50 mm, de façon particulièrement préférée d'au maximum 25 mm.

11. Séparateur à coalescence selon l'une quelconque des revendications précédentes, la perméabilité à l'air totale de la structure multicouche étant inférieure à 100 l/m²s, notamment inférieure à 70 l/m²s, de préférence inférieure à 50 l/m²s et de façon particulièrement préférée inférieure à 30 l/m²s.

12. Séparateur à coalescence selon l'une quelconque des revendications précédentes, le milieu filtrant de coalescence contenant des fibres de verre avec un pourcentage en masse d'au moins 50 %, notamment 90 %, de préférence d'au moins 93 %, de façon particulièrement préférée d'au moins 95 %.

13. Séparateur à coalescence selon l'une quelconque des revendications précédentes, le pourcentage en masse de matériaux incinérables dans le milieu filtrant de coalescence étant d'au maximum 10 %, de préférence d'au maximum 7 %, de façon particulièrement préférée d'au maximum 5 %.

14. Séparateur à coalescence selon l'une quelconque des revendications précédentes, le milieu filtrant de coalescence présentant un liant avec un pourcentage en masse d'au maximum 10 %, de préférence d'au maximum 7 %, de façon particulièrement préférée d'au maximum 5 %, ce liant ne contenant de préférence pas de fibres bicomposantes, de façon particulièrement préférée pas de fibres fondues, et étant par exemple un liant à base d'acrylate.

15. Séparateur à coalescence selon l'une quelconque des revendications précédentes, le milieu filtrant de coalescence présentant des fibres, les fibres du milieu filtrant de coalescence présentant des caractéristiques hydrophobes et/ou oléophobes.

16. Séparateur à coalescence selon l'une quelconque des revendications précédentes, le milieu filtrant de coalescence présentant des fibres de verre, au moins 90 %, de préférence au moins 95 % des fibres de verre du milieu filtrant de coalescence ayant un diamètre de fibres supérieur à 0,5 µm, de préférence supérieur à 1 µm.

17. Séparateur à coalescence selon l'une quelconque des revendications précédentes, le milieu filtrant de coalescence présentant des fibres de verre, au moins 90 %, de préférence au moins 95 % des fibres de verre du milieu filtrant de coalescence ayant un diamètre de fibre inférieur à 10 µm, de préférence inférieur à 8 µm, de façon particulièrement préférée inférieur à 6 µm.

18. Séparateur à coalescence selon l'une quelconque des revendications précédentes qui est monté, en tant que premier niveau de séparation constitué de fibres, notamment de fibres de verre, en aval de la vis d'un compresseur à vis.

19. Système pneumatique de compresseur, comprenant un réservoir sous pression pour des compresseurs stationnaires ou un boîtier de cartouche séparatrice exécuté en tant que filtre interchangeable et montable sur une tête de raccord, et comprenant par ailleurs un séparateur à coalescence selon l'une quelconque des revendications précédentes qui est disposé de manière échangeable dans le réservoir sous pression ou est disposé de manière échangeable dans le boîtier de cartouche séparatrice de manière échangeable avec ce réservoir sous pression.

20. Utilisation d'un séparateur à coalescence selon l'une des revendications précédentes 1 à 19 destiné à séparer des gouttelettes de liquide d'un flux de gaz, notamment comme séparateur d'huile principal monté en aval d'un compresseur à vis, de préférence dans un système pneumatique de compresseur selon la revendication précédente, de préférence avec un séparateur à coalescence fin placé en aval du séparateur à coalescence servant à la séparation consécutive de l'huile résiduelle se trouvant dans le courant d'air comprimé.
